# EUROPÄISCHE PATENTSCHRIFT

(11) **EP 3 984 620 B1**
(45) Veröffentlichungstag und Bekanntmachung des Hinweises auf die Patenterteilung: **19.03.2025**
(21) Anmeldenummer: 21196898.7
(22) Anmeldetag: 15.09.2021
(51) Int. Cl.: B01D 46/681, B01D 46/00, B01D 46/64, A47L 9/12, A47L 9/16, A47L 9/20, B01D 46/10, B01D 46/52

(54) **ABSCHEIDESYSTEM MIT ÄUSSERER FILTEREINHEIT**
SEPARATION SYSTEM WITH EXTERNAL FILTER UNIT
SYSTÈME DE SÉPARATION POURVU D'UNITÉ DE FILTRE EXTERNE

(30) Priorität: 14.10.2020 DE 102020212983
(43) Veröffentlichungstag der Anmeldung: 20.04.2022
(73) Patentinhaber: BSH Hausgeräte GmbH, 81739 München (DE)
(72) Erfinder: Seith, Thomas, 97616 Bad Neustadt (DE)

(56) Entgegenhaltungen:
- EP-A1- 2 002 775
- EP-A1- 2 191 761
- SU-A2- 1 049 111

## Beschreibung

Die Erfindung betrifft ein Abscheidesystem für eine Saugvorrichtung.

Eine Saugvorrichtung weist typischerweise einen Saugmund auf, über den mittels eines Luftstroms Verunreinigungen, insbesondere Staubpartikel, von einer zu reinigenden Oberfläche, aufgesaugt werden. Der Luftstrom kann durch ein Gebläse bewirkt werden. Die Verunreinigungen können mittels eines Abscheiders bzw. mittels eines Abscheidesystems aus dem Luftstrom entfernt und in einem Sammelbereich gesammelt werden.

Ein Abscheidesystem, insbesondere für einen Handstaubsauger, weist typischerweise einen tangentialen Einlass zu der Innenwand des Sammelbereichs auf, um einen Wirbelvorabscheider zu bilden. Der Filter (z. B. mit einem Sieb und einem Lamellenfilter bzw. mit einer Microfilter-Schaum-Kombination) bildet einen Zylinder oder Konus im Inneren des Abscheiders. Durch den Strömungsverlauf von außen nach innen werden die Querschnitte abstromseitig immer kleiner. Der kleinste Querschnitt befindet sich dann am Ausgang des Sammelbereichs in Richtung Gebläse. Des Weiteren wird auch die Filterfläche aufgrund des nach Innen geringer werdenden Durchmessers relativ klein. Dies kann zu einer Engstelle für den Saug-Luftstrom führen, insbesondere wenn die relativ kleine Filterfläche mit Verunreinigungen behaftet ist. Als Folge daraus sinkt die Saugleistung der Saugvorrichtung. EP 2 002 775 A1 beschreibt einen Staubsauger mit einem zylinderförmigen Staubfilter, der über einem Auffangbehälter angeordnet ist.

Das vorliegende Dokument befasst sich mit der technischen Aufgabe, ein Abscheidesystem bereitzustellen, das auch nach einer relativ langen Nutzungsdauer ohne Entleerung bzw. Reinigung weiterhin eine hohe Saugleistung ermöglicht.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Abscheidesystem zur Abscheidung von Verunreinigungen aus einem Luftstrom beschrieben. Das Abscheidesystem kann z. B. in einer Saugvorrichtung (z. B. in einem Staubsauger, insbesondere in einem Handstaubsauger, oder in einem Saugroboter) verwendet werden. Dabei kann durch ein Gebläse ein Saug-Luftstrom durch das Abscheidesystem generiert werden.

Das Abscheidesystem umfasst eine als Hohlzylinder ausgebildete Filtereinheit mit einem Luftfilter (insbesondere mit einem Feinstaubfilter und/oder mit einem HEPA (High-Efficiency Particulate Air)), die einen zylinderförmigen Sammelbereich für Verunreinigungen umschließt. Die Filtereinheit kann somit die Mantelfläche eines (kreisförmigen) Hohlzylinders bilden. Des Weiteren kann die Mantelfläche die Umrandung bzw. die Wand für den Sammelbereich für die ausgesaugten Verunreinigungen bilden. Dabei können die Erzeugende des zylinderförmigen Sammelbereichs und/oder der (hohl-) zylinderförmigen Filtereinheit kreis- oder ovalförmig sein.

Der Luftfilter kann einen Lamellenfilter und/oder einen Microfilter umfassen. Insbesondere kann der Luftfilter eine Vielzahl von Lamellen aufweisen, die um den Sammelbereich herum verteilt angeordnet sind. Die einzelnen Lamellen können sich dabei entlang der Längsachse des Abscheidesystems erstrecken (wobei die Längsachse der Hochachse der zylinderförmigen Filtereinheit entspricht). Der Luftfilter kann ausgebildet sein, Feinstaub, insbesondere Partikel mit einer Partikelgröße zwischen 1 µm und 20 µm, aus dem Luftstrom zu filtern.

Die Filtereinheit kann ein dem Sammelbereich zugewandtes Sieb umfassen, das ausgebildet ist, Verschmutzungen aus dem Luftstrom zurückzuhalten, die eine Partikelgröße aufweisen, die gleich wie oder größer als ein Größen-Schwellenwert ist. Mit dem Sieb können somit relativ grobe Verunreinigungen in dem Sammelbereich zurückgehalten werden. Der Luftfilter kann zwischen der Gehäusewand und dem Sieb angeordnet sein, so dass der Luftfilter nicht mit groben Verschmutzungen zugesetzt wird. Der Luftfilter kann ausgebildet sein, Verschmutzungen aus dem Luftstrom durch das Sieb zurückzuhalten, die eine Partikelgröße aufweisen, die kleiner als der Größen-Schwellenwert ist. Durch den Luftfilter können somit relativ kleine Verschmutzungen, insbesondere Staub, aus dem Luftstrom entfernt werden. Aufgrund der Tatsache, dass der Luftfilter um den Sammelbereich, insbesondere um das Sieb, herum angeordnet ist, weist der Luftfilter eine relativ große Wirkfläche auf, was es ermöglicht, auch nach einer relativ langen Betriebszeit weiterhin eine hohe Saugleistung bereitzustellen.

Das Abscheidesystem weist ferner eine zylinderförmige Gehäusewand auf, die die Filtereinheit umschließt. Dabei ist zwischen der Gehäusewand und der Filtereinheit ein Spalt, insbesondere ein ringförmiger Spalt, angeordnet. Der Spalt ist dabei derart ausgebildet, dass durch den Spalt ein Luftstrom, insbesondere ein Luftstrom durch die Filtereinheit, bewirkt werden kann. Der Luftstrom kann dabei durch ein Gebläse bewirkt werden, das an einer (ersten) Stirnfläche der (kreis- oder oval-) zylinderförmigen Gehäusewand angeordnet ist.

Des Weiteren umfasst das Abscheidesystem einen von der Gehäusewand zu dem Sammelbereich verlaufenden Einlasskanal, der ausgebildet ist, einen Luftstrom mit den Verunreinigungen von außerhalb des Abscheidesystems zu dem Sammelbereich zu führen. Der Luftstrom kann z. B. von einem Saugmund der Saugvorrichtung zu dem Einlasskanal und über den Einlasskanal in den Sammelbereich gelangen. Zu diesem Zweck umfasst die Filtereinheit eine Aussparung, z. B. einen Durchbruch, durch die der Einlasskanal von der Gehäusewand zu dem Sammelbereich verläuft. Die Aussparung kann z. B. durch das Sieb verlaufen. Des Weiteren kann die Aussparung durch einen Rahmen des Luftfilters verlaufen (der z. B. an einer Stirnfläche, insbesondere an der oberen Stirnfläche des Luftfilters angeordnet ist). So kann der Einlasskanal in effizienter Weise durch die Filtereinheit hindurchgeführt werden. Insbesondere kann so vermieden werden, eine relativ aufwändige Aussparung durch die Lamellen des Luftfilters bereitzustellen.

Der Luftstrom kann, ausgehend von dem Sammelbereich, die Filtereinheit (in radialer Richtung, relativ zu der Längsachse des Abscheidesystems) durchlaufen, so dass der Luftstrom gefiltert wird, und so, dass die Verunreinigungen im Sammelbereich zurückgehalten werden. Der Luftstrom kann dann entlang des Spalts zwischen der Gehäusewand und der Filtereinheit aus dem Abscheidesystem heraus (und zu dem Gebläse) geführt werden.

Es wird somit ein Abscheidesystem beschrieben, bei dem ein innenliegender Sammelbereich durch eine außenliegende Filtereinheit (mit einem Luftfilter) umschlossen wird. Dabei kann die Filtereinheit, insbesondere der Luftfilter der Filtereinheit, die Mantelfläche des zylinderförmigen Sammelbereichs bilden. Durch die Bereitstellung einer außenliegenden Filtereinheit kann ein Abscheidesystem mit einem Luftfilter bereitgestellt werden, der eine relativ große Wirkfläche aufweist, und daher auch nach einer relativ langen Betriebszeit weiterhin eine hohe Saugleistung aufweist.

Die Filtereinheit kann eine (kreis-) zylinderförmige Innenwand aufweisen, die dem Sammelbereich zugewandt ist und/oder die den Sammelbereich umschließt. Die Innenwand kann insbesondere durch das Sieb der Filtereinheit gebildet werden. Der Einlasskanal kann ausgebildet sein, einen tangential zu der Innenwand der Filtereinheit verlaufenden und/oder zyklonartig bzw. schraubenförmig verlaufenden Luftstrom in dem Sammelbereich zu bewirken. Es kann somit bewirkt werden, dass der Luftstrom an der Innenwand der Filtereinheit entlang um die Längsachse des Abscheidesystems herum zirkuliert.

Zu diesem Zweck kann der Einlasskanal ein entlang der Innenwand der Filtereinheit verlaufendes, gekrümmtes Segment aufweisen. Das Segment kann sich dabei über einen bestimmten Winkelbereich (z. B. von 20° oder mehr) um die Längsachse des Abscheidesystems erstrecken.

Alternativ oder ergänzend können an der Innenwand der Filtereinheit ein oder mehrere Führungsrippen angeordnet sein, die ausgebildet sind, den aus dem Einlasskanal in den Sammelbereich eintretenden Luftstrom zyklonartig und/oder schraubenförmig um die Längsachse des Sammelbereichs bzw. des Abscheidesystems zu führen. Durch das Bewirken eines schraubenförmig verlaufenden Luftstroms kann eine besonders zuverlässige Abscheidung von relativ großen Verunreinigungen und/oder von Haaren bewirkt werden (ohne ein Zusetzen der Innenwand, insbesondere des Siebs, der Filtereinheit zu bewirken).

Wie bereits oben dargelegt, kann die Filtereinheit ein dem Sammelbereich zugewandtes Sieb umfassen. Dabei kann das Sieb über die Gesamtfläche des Siebs eine durchschnittliche Porengröße aufweisen (wobei die durchschnittliche Porengröße z. B. dem o. g. Größen-Schwellenwert entspricht). Das Sieb kann an der dem Einlasskanal gegenüberliegenden Stelle, an der der Luftstrom aus dem Einlasskanal (erstmalig) auf das Sieb trifft, eine Porengröße aufweisen, die kleiner als die durchschnittliche Porengröße ist. Ggf. kann das Sieb an der besagten Stelle durchgängig bzw. ohne Poren ausgebildet sein. So können in zuverlässiger Weise ein Ansammeln von Verunreinigungen an der Austrittsstelle des Einlasskanals und eine damit verbundene Reduzierung der Saugleistung vermieden werden.

Das Abscheidesystem kann einen Kolben (auch als Scheibe bezeichnet) umfassen, der ausgebildet ist, an der Innenwand (insbesondere an dem Sieb bzw. an der Siebfläche) der Filtereinheit entlang bewegt zu werden, um an der Innenwand haftende Verunreinigungen von der Innenwand der Filtereinheit zu lösen. Dabei kann der Kolben eine elastische und/oder ringförmige Lippe aufweisen, die die Innenwand der Filtereinheit berührt. Des Weiteren kann der Kolben ausgebildet sein, entlang der Längsachse des Sammelbereichs bzw. des Abscheidesystems von der ersten Stirnfläche bis zu der gegenüberliegenden zweiten Stirnfläche des Sammelbereichs bzw. der Gehäusewand bewegt zu werden. Durch die Bereitstellung eines beweglichen Kolbens kann in komfortabler und zuverlässiger Weise eine Reinigung der Filtereinheit ermöglicht werden.

Des Weiteren kann der Kolben ausgebildet sein, Verunreinigungen in dem Sammelbereich an der zweiten Stirnfläche zu komprimieren. So kann die Betriebsdauer zwischen Entleerungen erhöht werden.

Das Abscheidesystem kann eine (ggf. demontierbare) Kolbenstange umfassen, die es ermöglicht, den Kolben innerhalb des Sammelbereichs zu bewegen. Alternativ oder ergänzend kann das Abscheidesystem einen Seilzug und/oder eine Feder umfassen, die jeweils ausgebildet sind, den Kolben innerhalb des Sammelbereichs zu bewegen. So kann eine Reinigung der Innenfläche der Filtereinheit in besonders komfortabler Weise bewirkt werden.

Das Abscheidesystem kann an der zweiten Stirnfläche der Gehäusewand einen Deckel, insbesondere eine Klappe, umfassen. Die zweite Stirnfläche kann dabei vorgesehen sein, im Betrieb des Abscheidesystems unten angeordnet zu sein. Der Kolben kann ausgebildet sein, den Deckel zu Öffnen (z. B. indem der Kolben gegen den Deckel drückt), wenn der Kolben zu der zweiten Stirnfläche hinbewegt wird, so dass Verunreinigungen aus dem Sammelbereich entfernt werden, insbesondere herausfallen, können. So kann eine besonders komfortable Entleerung des Sammelbereichs ermöglicht werden.

Das Abscheidesystem kann derart ausgebildet sein, dass der Kolben vor Inbetriebnahme des Abscheidesystems automatisch an die erste Stirnfläche bewegt wird. Alternativ oder ergänzend kann das Abscheidesystem derart ausgebildet sein, dass eine Inbetriebnahme des Abscheidesystems nicht möglich ist, wenn sich der Kolben nicht an der ersten Stirnfläche befindet. So kann ein zuverlässiger Betrieb des Abscheidesystem gewährleistet werden.

Die Filtereinheit kann eine Aussparung zur Bereitstellung eines Sichtfensters aufweisen, das eine Sicht von außerhalb der Gehäusewand auf den Sammelbereich ermöglicht. So kann auch bei Verwendung eines innenliegenden Sammelbereichs eine komfortable Überwachung des Abscheidesystems ermöglicht werden.

Wie bereits oben dargelegt, kann der Luftfilter eine Vielzahl von Lamellen umfassen, die sich jeweils entlang der Längsachse der Gehäusewand erstrecken. Das Abscheidesystem kann an der Innenseite der Gehäusewand zumindest einen Vorsprung aufweisen, der in einen Zwischenraum zwischen zwei Lamellen hineinragt. Der Vorsprung kann insbesondere als (starre) Rippe oder als (bewegliches und/oder flexibles) Paddel ausgebildet sein. Des Weiteren kann das Abscheidesystem derart ausgebildet sein, dass das Luftfilter und die Gehäusewand relativ zueinander hin- und her verdreht werden können (um die Längsachse des Abscheidesystems), so dass der Vorsprung in Zwischenräume zwischen unterschiedlichen Lamellenpaaren bewegt wird, und dabei jeweils einen Ruck zur Reinigung zumindest einer Lamelle bewirkt. So kann ein komfortables und zuverlässiges Abklopfen der von dem Luftfilter aufgenommenen Verunreinigungen bewirkt werden.

Gemäß einem weiteren Aspekt wird eine Saugvorrichtung beschrieben, die das in diesem Dokument beschriebene Abscheidesystem umfasst. Des Weiteren kann die Saugvorrichtung ein Gebläse umfassen, das ausgebildet ist, den Saug-Luftstrom durch das Abscheidesystem zu bewirken.

Es ist zu beachten, dass jegliche Aspekte des in diesem Dokument beschriebenen Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen.
- Figur 1: unterschiedliche Ansichten eines beispielhaften Abscheidesystems;
- Figur 2: unterschiedliche Ansichten eines Abscheidesystems nach Komprimierung der gesammelten Verunreinigungen;
- Figur 3: unterschiedliche Ansichten eines Abscheidesystems mit geöffneter Klappe;
- Figur 4a: ein beispielhaftes Abscheidesystem mit einer entfernbaren Kolbenstange;
- Figur 4b: ein beispielhaftes Abscheidesystem mit einer Schmutzauszugshilfe;
- Figur 4c: ein beispielhaftes Abscheidesystem mit einer Vorrichtung zur Entleerung des Feinstaubbereichs;
- Figur 5a: einen Ansaug- bzw. Einlasskanal mit einer Verjüngung;
- Figur 5b: einen Einlasskanal mit einer tangentialen Kanalführung; und
- Figur 6: ein beispielhaftes Abscheidesystem mit einem Sichtfenster.

Wie eingangs dargelegt, befasst sich das vorliegende Dokument mit der Bereitstellung eines Abscheidesystems, das auch noch nach einer relativ langen Betriebsdauer eine hohe Saugleistung ermöglicht. Dies kann insbesondere durch die Bereitstellung einer Filtereinheit mit einer relativ großen Wirkfläche erreicht werden. In diesem Dokument wird ein Abscheidesystem beschrieben, bei dem die Filtereinheit (mit dem Luftfilter) um den Sammelbereich herum angeordnet ist, um die Wirkfläche der Filtereinheit, insbesondere die Wirkfläche des Luftfilters der Filtereinheit, zu erhöhen.

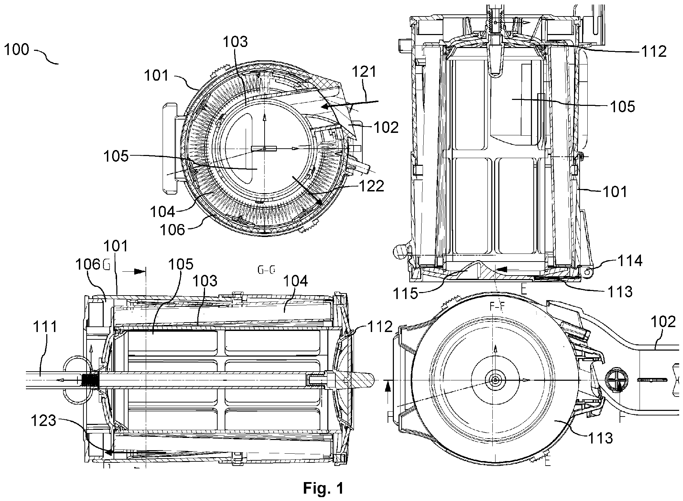

Fig. 1 zeigt unterschiedliche Ansichten eines Abscheidesystems 100, das eine (insbesondere zylinderförmige) Gehäusewand 101 aufweist. Links oben wird ein Schnitt durch den Einlasskanal 102 und durch die Filtereinheit 103, 104 und durch die Gehäusewand 101 des Abscheidesystems 100 gezeigt. Rechts unten wird eine Ansicht auf die zweite (untere) Stirnfläche der Gehäusewand 101 bzw. des Abscheidesystems 100 gezeigt. Links unten und rechts oben werden unterschiedliche Seitenansichten des Abscheidesystems 100 gezeigt.

Die Gehäusewand 101 umschließt einen Sammelbereich 105 für aufgesaugte Verunreinigungen. Dabei ist der Sammelbereich 105 im Zentrum des Abscheidesystems 100 angeordnet. Der Saug-Luftstrom 121 wird über einen Einlass- bzw. Eingangskanal 102 durch die Gehäusewand 101 in das Innere des Abscheidesystems 100, insbesondere bis zu dem Sammelbereich 105, geführt.

Die Filtereinheit 103, 104 ist zwischen dem (zylinderförmigen) Sammelbereich 105 und der (zylinderförmigen) Gehäusewand 101 angeordnet. Insbesondere umschließt die Filtereinheit 103, 104 den Sammelbereich 105. Ferner verläuft der Einlasskanal 102 durch die Filtereinheit 103, 104, d. h. durch eine Öffnung der Filtereinheit 103, 104, so dass der Ansaug-Luftstrom 121 direkt von einem Saugmund der Saugvorrichtung bis zu dem Sammelbereich 105 geführt werden kann. Der Luftstrom 121 durchläuft anschließend, ausgehend von dem Sammelbereich 105, die Filtereinheit 103, 104 (dargestellt durch den Luftstrom 122) in Richtung zu der Gehäusewand 101. Zwischen der Gehäusewand 101 und der Filtereinheit 103, 104 ist ein (ringförmiger) Spalt 106 vorgesehen, durch den der gefilterte Luftstrom 123 entlang der Gehäusewand 101 bis zu dem Gebläse geführt wird. Das Gebläse (nicht dargestellt) ist dabei an der ersten Stirnfläche der (zylinderförmigen) Gehäusewand 101 bzw. des Abscheidesystems 100 angeordnet.

Die Filtereinheit 103, 104 kann die Form eines Hohlzylinders aufweisen, wobei die Mantelfläche des Hohlzylinders der Wirkfläche der Filtereinheit 103, 104 entspricht (abgesehen von dem Durchbruch für den Einlasskanal 102). Der Hohlzylinder umschließt dabei den Sammelbereich 105 für die aufgesaugten Verunreinigungen. Die Filtereinheit 103, 104 kann ein (Flusen-) Sieb 103 aufweisen, das dem Sammelbereich 105 zugewandt ist, und das ausgebildet ist, relativ grobe Verunreinigungen (wie z. B. Haare oder grobe Partikel) zurückzuhalten. Ferner umfasst die Filtereinheit 103, 104 einen Luftfilter 104, der z. B. als Lamellenfilter ausgebildet ist, und der ausgebildet ist, relativ feine Verunreinigungen und/oder (Fein-) Staub aus dem Luftstrom 121 zu filtern. Die von dem Luftfilter 104 herausgefilterten Verunreinigungen können sich in einem Zwischenraum zwischen dem Sieb 103 und dem Luftfilter 104 sammeln.

Der Einlasskanal 102 kann derart tangential zu der dem Sammelbereich 105 zugewandten Innenwand der Filtereinheit 103, 104 verlaufen, dass der Saug-Luftstrom 121 im Sammelbereich 105 eine kreisende und/oder zyklonartige Bewegung ausführt (um die Längsachse des Sammelbereichs 105). So kann ein besonders zuverlässiges Abscheiden der groben Verunreinigungen, insbesondere von Haaren, bewirkt werden. Ferner kann so ein frühzeitiges Zusetzen der Filtereinheit 103, 104, insbesondere des Siebs 103, vermieden werden. Des Weiteren kann so bewirkt werden, dass der Grobschmutz gut am Boden (insbesondere an dem Deckel 113) des Sammelbereichs 105 orientiert wird und sich von unten nach oben aufbaut.

Das Abscheidesystem 100 kann einen Kolben 112 aufweisen, durch den Verunreinigungen, die sich in dem Sammelbereich 105 angesammelt haben, zusammengepresst werden können. Der Kolben 112 kann zu diesem Zweck entlang der Längsachse des zylinderförmigen Sammelbereichs 105 an der Innenwand der Filtereinheit 103, 104 entlanggeführt werden. Insbesondere kann der Kolben 112 von der ersten Stirnfläche des Sammelbereichs 105 bzw. der Gehäusewand 101 bis zu der gegenüberliegenden zweiten Stirnfläche des Sammelbereichs 105 bzw. der Gehäusewand 101 bewegbar angeordnet sein, um die Verunreinigungen in dem Sammelbereich 105 zu komprimieren. Der Kolben 112 kann dabei z. B. mittels einer Kolbenstange 111 bewegt werden.

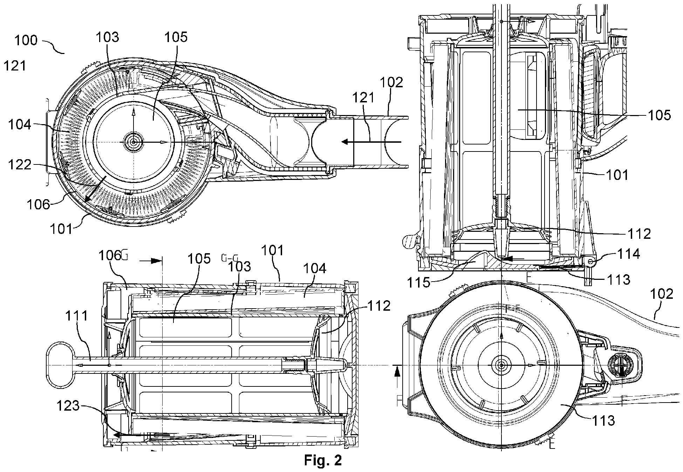

An der zweiten Stirnfläche kann, wie in Fig. 2 dargestellt, ein Deckel 113, insbesondere eine Klappe, angeordnet sein, der ausgebildet ist, den Sammelbereich 105 und/oder die Gehäusewand 101 an der zweiten Stirnfläche zu bedecken, so dass ein geschlossener Raum zum Sammeln der Verunreinigungen entsteht. Der Deckel 113 kann an einer Seite schwenkbar gelagert an einem Lager bzw. an einer Achse 114 gelagert sein, so dass der Deckel 113 von der zweiten Stirnfläche weggeklappt werden kann, um den Sammelbereich 105 zu öffnen. Der Kolben 112 kann ausgebildet sein, gegen die Innenseite des Deckels 113 zu drücken, um den Deckel 113 zu öffnen, so dass die Verunreinigungen aus dem Sammelbereich 105 entfernt werden können, ohne den Sammelbereich 105 zu berühren.

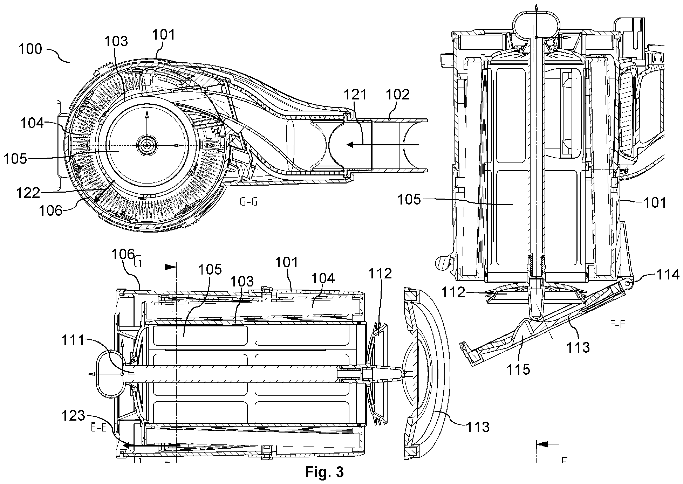

Fig. 3 zeigt das Abscheidesystem 100 mit einem geöffneten Deckel 113. Der Deckel 113 kann einen Griff 115 aufweisen, der es einem Nutzer ermöglicht, den Deckel 113 ohne Verwendung des Kolbens 112 zu öffnen.

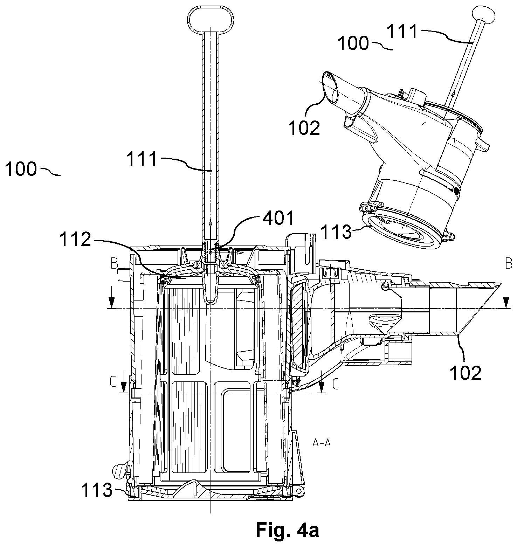

Wie in Fig. 4a dargestellt, kann die Kolbenstange 111 ausgebildet sein, an einem Befestigungspunkt 401 mit dem Kolben 112 verbunden bzw. von dem Kolben 112 getrennt zu werden. Beispielsweise kann es ermöglicht werden, die Kolbenstange 111 in den Kolben 112 einzuschrauben bzw. herauszuschrauben. Durch das Entfernen der Kolbenstange 111 kann ein besonders kompaktes Abscheidesystem 100 bereitgestellt werden.

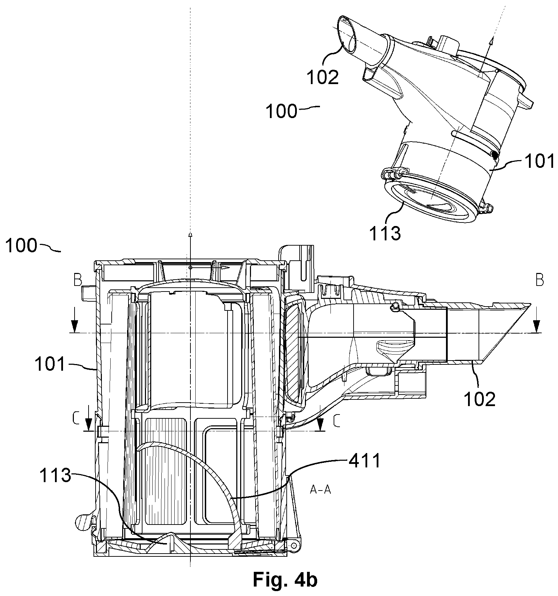

Das in Fig. 4b dargestellte Abscheidesystem 100 umfasst keinen Kolben 112 zur Komprimierung und zum Herausdrücken der Verunreinigungen. Das Abscheidesystem 100 kann jedoch an dem Deckel 113 eine Auszugshilfe 411 aufweisen, die ausgebildet ist, die Verunreinigungen aus dem Sammelbereich 105 heraus zu befördern, wenn der Deckel 113 geöffnet wird. Die Auszughilfe 411 kann, wie in Fig. 4b dargestellt, eine oder mehrere gebogene Rippen aufweisen, die in den Sammelbereich 105 hineinragen, wenn der Deckel 113 geschlossen ist, und beim Öffnen des Deckels 113 aus dem Sammelbereich 105 herausgezogen werden (und dabei Verunreinigungen mitziehen).

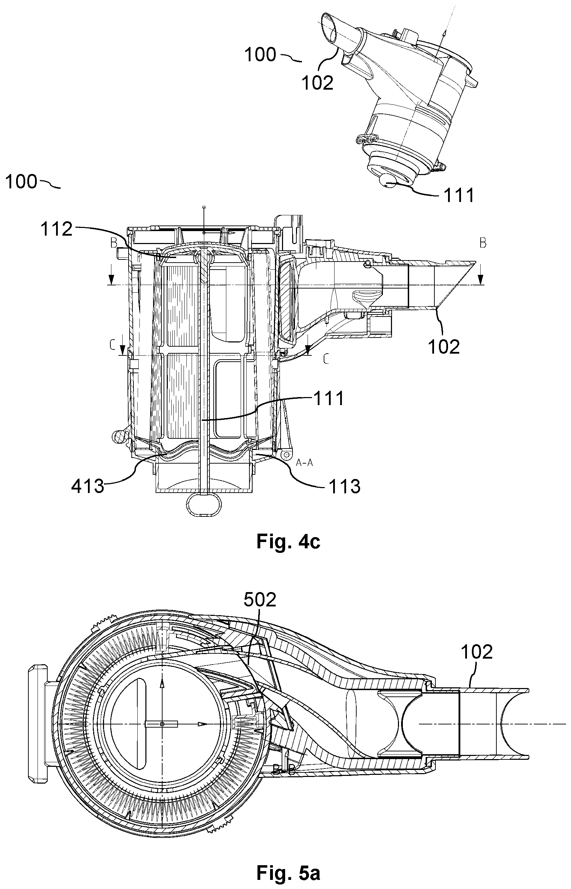

Wie in Fig. 4c dargestellt, kann an der zweiten Stirnfläche des Sammelbereichs 105 eine (wellenförmige) Dichtlippe 413 angeordnet sein, die ausgebildet ist, an der zweiten Stirnfläche den Zwischenraum zwischen dem Sieb 103 und dem Luftfilter 104 abzudichten, um zu vermeiden, dass während des Betriebs des Abscheidesystems 100 relativ große Verunreinigungen an dem Sieb 103 vorbei zu dem Luftfilter 104 gelangen, und den Luftfilter 104 zusetzen. Andererseits kann die Dichtlippe 413 ausgebildet sein, z. B. durch den Kolben 112, zur Seite geschoben zu werden, um ein Entleeren des Staubs zu ermöglichen, der sich in dem Zwischenraum zwischen dem Sieb 103 und dem Luftfilter 104 angesammelt hat. Beispielsweise kann der Kolben 112 zu der zweiten Stirnfläche hin gedrückt oder gezogen werden, und der Kolben 112 kann dabei die Dichtlippe 413 von der Kante des Siebs 103 abheben, um den Zwischenraum zwischen dem Sieb 103 und dem Luftfilter 104 freizugeben. Die Lippe 413 ist bevorzugt wellenförmig ausgebildet, damit auch beim Abheben der Lippe 413 von der Kante des Siebs 103 durch den Kolben 112 eine Öffnung zwischen dem Sieb 103 und dem Luftfilter 104 freigelegt wird. Ohne Welle könnte es vorkommen, dass die Lippe des Kolbens 112 die Öffnung zwischen dem Sieb 103 und dem Luftfilter 104 verschließt.

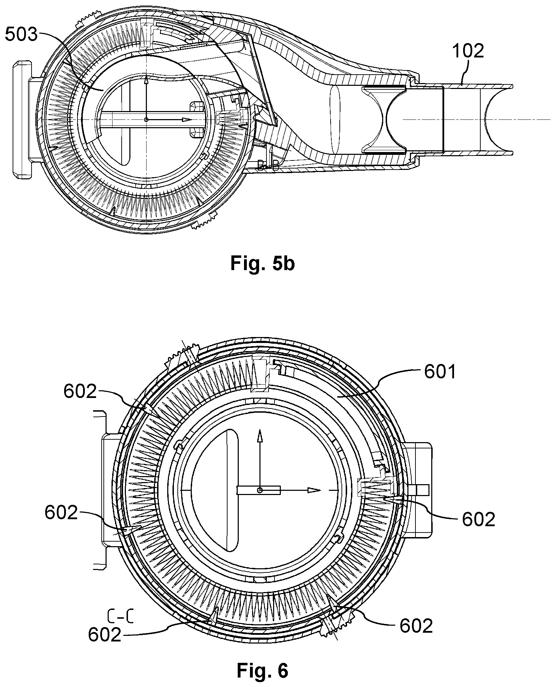

Wie in Fig. 5a dargestellt, kann der Einlasskanal 102 an dem dem Sammelbereich 105 zugewandten Ende eine Verjüngung 502 aufweisen, durch die die Zyklonbildung des Luftstroms 121 unterstützt werden kann. Alternativ oder ergänzend kann der Einlasskanal 102 ein gebogenes Segment 503 aufweisen, das dem kreisförmigen Verlauf der Wand des Sammelbereichs 105 bzw. des Siebs 103 folgt, um die Zyklonbildung des Luftstroms 121 zu unterstützen und/oder um Wirbelbildungen im Einlasskanal 102 zu reduzieren, so dass vorzugsweise kurze Haare in Strömungsrichtung orientiert werden und sich nicht im Sieb 103 verfangen können.

Es wird somit eine Abscheidesystem 100 beschrieben, das einen Schmutzeinlass, d. h. einen Einlasskanal, 102 nach innen durch den Filter 103, 104 aufweist. Mit anderen Worten, am Inlet bzw. am Einlasskanal 102 wird der Schmutz zunächst (ohne Filterung) durch eine Aussparung des Filters 103, 104 geleitet. Der abgedichtete Einlasskanal 102 durchbricht das Filtersystem 103, 104 und führt den gesamten Schmutz in den inneren Zylinder, d. h. in den Sammelbereich 105, wo der Grobschmutz gesammelt wird.

Der Einlasskanal 102 ist bevorzugt tangential zur inneren Siebwand ausgebildet, damit sich z. B. kurze Haare nicht im Sieb 103 verfangen, sondern an der Siebfläche entlang gleiten und nach unten abgeschieden werden. Alternativ ist auch eine gerade Einströmung möglich. Die dem Einlass gegenüberliegende Siebwand weißt dann bevorzugt eine besonders feine Lochweite auf oder ist komplett geschlossen ausgebildet, um zu verhindern, dass sich Flusen oder Haare in diesem Bereich des Siebs 103 verfangen und den Einlasskanal 102 verstopfen. Das Sieb 103 ist bevorzugt als ein Foliensieb (z. B. hergestellt aus einer geätzten, dünnen Metallfolie) ausgebildet, da ein Foliensieb relativ leicht mittels einer überstreifenden Lippe reinigbar ist (im Vergleich zu einem gewebten Sieb, bei dem ein Abstreifen ebenfalls möglich, aber typischerweise schwieriger ist).

Im Einlass (d. h. am Ende des Einlasskanals 102) oder direkt danach können ein oder mehrere zusätzliche Führungsrippen angebracht werden, um die tangentiale Ausrichtung des einströmenden Schmutzes und/oder der Haare weiter zu verbessern. Eine Führungsrippe kann z. B. aus einem Hartkunststoff gefertigt sein und/oder kann z. B. ein oder mehrere weichelastische Segmente aufweisen. Die ein oder mehreren weichelastischen Segmente können so gestaltet sein, dass sich die Segmente im Normalbetrieb mit mittelgroben Partikeln nicht verformen und eine (nach Möglichkeit optimale) tangentiale Einströmung der Partikel gewährleisten. Andererseits können sich die ein oder mehrere Segmente beim Einströmen von übergroßen Partikeln deformieren, sodass die groben Partikel hindurchschlüpfen können. Alternativ oder ergänzend kann ein tangentialer Führungskanal 503 im Abscheidebereich 105 bereitgestellt werden, um eine möglichst gute Orientierung der Partikel zu erreichen.

Die Grobschmutzsammlung erfolgt innerhalb des Siebzylinders 103 im unteren Bereich des Siebzylinders 103 (d. h. an der zweiten Stirnfläche). Der tangentiale Luftstrom 121 und die sich schraubenförmig nach unten ausbildende Strömungsspirale führt dazu, dass das Sieb 103 über einen relativ langen Betriebszeitraum offengehalten wird, und dass der Schmutz sich im unteren Bereich sammelt und verdichtet. Der Schmutz baut sich somit während des Betriebs von unten nach oben auf. Ein Festzurren von relativ langen Haaren um die Filtereinheit 103, 104 und ein dadurch bewirktes Zusetzen der Filtereinheit 103, 104 sind in der in diesem Dokument beschriebenen Anordnung nicht möglich. Im Gegenteil, die in diesem Dokument beschriebene Luftführung führt tendenziell zu einer Knäuelbildung am Boden des Sammelbereichs 105, wodurch auch Flusen und Feinstaub gebunden werden.

Die Schmutzentleerung (von groben und feinen Verunreinigungen) kann nach unten über eine Klappe 113 erfolgen. Der im unteren Bereich gesammelte Schmutz kann durch eine nach unten öffnende Klappe 113 entleert werden. Als Auszugshilfe für den Schmutz kann eine Rippe 411, insbesondere eine bogenförmige, biegsame Rippe, bereitgestellt werden, die während des Betriebs von Flusen/Haaren umströmt wird. Die Rippe 411 kann dabei zunächst an der Siebwand anliegen. Beim Öffnen der Klappe 113 kann die Rippe 411 gestreckt und am Sieb 103 entlang nach unten gezogen werden, bis die Rippe 411 frei wird. Der Schmutz kann dann an der nach unten offenen Rippe 411 heruntergleiten.

Alternativ oder ergänzend kann ein konisch, sich nach unten aufweitendes Sieb 103 verwendet werden, um ein Entleeren des Schmutzes zu unterstützten.

Die Klappe 113 kann ausgebildet sein, über einen Hebel bzw. Griff 115 per Hand langsam und dosiert geöffnet zu werden. Ggf. können eine die Klappe zuhaltende Feder und/oder ein Dämpfer bereitgestellt werden, um ein langsames Öffnen der Klappe 113 zu unterstützen. So kann ein zuverlässiges und komfortables Entleeren des Sammelbereichs 105 ermöglicht werden.

Das in diesem Dokument beschriebene Abscheidesystem 100 ermöglicht eine Filterdurchströmung (Sieb 103 und/oder Lamellenfilter 104) von innen nach außen. Die beschriebene Positionierung der Filtereinheit 103, 104 um den Schmutzbereich 105 herum, ermöglicht eine relativ große Filterfläche. So kann auch bei einer relativ hohen Staubbeladung (insbesondere auch in Bezug auf Feinstaub) des Abscheidesystems 100 weiterhin eine relativ hohe Saugleistung ermöglicht werden.

Zwischen dem Lamellenfilter 104 und der Gehäusewand 101 ist ein freier Ringkanal 106 angeordnet, durch den die gereinigte Luft 123 zum Gebläse abströmen kann. Der Ringkanal 106 kann dabei (aufgrund des relativ großen Umfangs) relativ schmal (z. B. 3mm oder weniger) sein, und dennoch eine relative große offene Fläche bereitstellen.

Im Schmutzsammelbereich 105 kann eine verschiebbare Einheit 111, 112 angeordnet sein, welche die Reinigung der Siebfläche, die Komprimierung des Schmutzes und das Ausleeren des Schmutzes in einem einzigen Arbeitsgang ermöglicht. Der Arbeitsgang kann je nach Bedarf unterteilt werden, z. B. in Siebfläche reinigen und Schmutz komprimieren, ohne den Schmutz auszuleeren.

Die Einheit 111, 112 kann eine rotationssymmetrische Scheibe 112 (in diesem Dokument auch als Kolben bezeichnet) umfassen, an der außen eine oder mehrere Lippen angebracht sind. Am oberen Ende kann ein langer Stößel bzw. eine Stange 111 befestigt sein, der bzw. die nach außen herausragt und mit der Hand betätigt werden kann. Die weichen Lippen an der Scheibe 112 können ausgebildet sein, den Schmutzkuchen vom Sieb 103 abzustreichen, so dass Schmutzkontakt mit der Hand vermieden wird. Die Scheibe 112 mit den Lippen ist bevorzugt so angeordnet, dass stets der Schmutz zur Entleeröffnung, d. h. zu der zweiten Stirnfläche, hin verdichtet wird. Je nachdem, wo sich die Ausleeröffnung befindet, wird der Schmutz von oben nach unten oder von unten nach oben verdichtet.

Ausführungsvarianten für die Betätigung der Lippenscheibe 112 sind: ein Stößel 111 zum Herausziehen der Scheibe 112 aus dem Sammelbereich 105; ein Seilzug; und/oder eine Feder.

Die Lippenscheibe 112 sollte nach erfolgter Betätigung wieder in ihre Ausgangsposition zurückbewegt werden, um einen zuverlässigen Betrieb des Abscheidesystems 100 zu ermöglichen. Dies kann z. B. durch folgende Maßnahmen bewirkt werden: eine Rückholfeder; ein Zurückfahren durch Unterdruck; eine Sperre, die den Einbau des Abscheidesystems 100 in der Saugvorrichtung verhindert; und/oder ein Endschalter, der das Einschalten der Saugvorrichtung verhindert, wenn der Endschalter nicht durch den Stößel 111 betätigt wird.

In dem in diesem Dokument beschriebenen Abscheidesystem 100 ist das Filtersystem 103, 104 um den Schmutzraum 105 herum angeordnet, sodass die Schmutzfüllmenge von außen kaum zu erkennen ist. Das Abscheidesystem 100 kann, wie in Fig. 6 dargestellt, ein Sichtfenster 601 umfassen, das das Filtersystem 103, 104 durchbricht, und das z. B. unterhalb des Einlasskanals 102 angebracht ist. Alternativ oder ergänzend kann eine Anzeige, ähnlich einer Filterwechselanzeige bei einem Beutelgerät, außen an der Saugvorrichtung angebracht werden. Der Füllstand kann dabei über die Veränderungen am Druck, dem Volumen oder der Eintrübung ermittelt werden.

Für eine Reinigung des Lamellenfilters 104 können d. h. Vorsprünge 602 an der Innenseite der Gehäusewand 101 angeordnet sein, die in die Lamellen des Lamellenfilters 104 eingreifen (wie in Fig. 6 dargestellt). Die einzelnen Vorsprünge 602 können keilförmig und ggf. flexibel ausgebildet sein. Die Reinigung des Lamellenfilters 104 kann dadurch erfolgen, dass der Filtereinsatz 103, 104 relativ zu der Gehäusewand 101 hin- und hergedreht wird. Es sind bevorzugt mehrere Vorsprünge 602 an der Innenseite der Gehäusewand 101 befestigt. Die Anzahl ist bevorzugt so gewählt, dass beim Hin- und Herdrehen sämtliche Lamellen zumindest einmal überstrichen werden. So kann auch bei Vorliegen eines durch die Filtereinheit 103, 104 verlaufenden Einlasskanals 102 ein zuverlässiges Reinigen, insbesondere ein zuverlässiges Abklopfen, des Lamellenfilters 104 ermöglicht werden. Ferner kann das Hin- und Herdrehen in komfortabler Weise durch einen Nutzer bewirkt werden.

Durch die in diesem Dokument beschriebenen Maßnahmen kann über eine relativ lange Betriebsdauer hinweg eine hohe Saugleistung ermöglicht werden. Ferner kann eine Saugvorrichtung mit einem hohen Gesamtwirkungsgrad bereitgestellt werden. Des Weiteren können relativ lange Reinigungszyklen für die Filtereinheit 103, 104 ermöglicht werden. Außerdem wird eine komfortable Entleerung des Sammelbereichs 105 ermöglicht. Des Weiteren kann das in diesem Dokument beschriebene Abscheidesystem 100 in kompakter Weise gebaut werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems veranschaulichen sollen.

### Bezugszeichenliste

- 100: Abscheidesystem
- 101: Gehäusewand
- 102: Einlasskanal
- 103: Sieb
- 104: Luftfilter
- 105: Sammelbereich
- 106: Spalt
- 111: Stange
- 112: Kolben
- 113: Deckel
- 114: Achse (Deckel)
- 115: Griff
- 121: Luftstrom
- 122: Luftstrom (gesiebt)
- 123: Luftstrom (gefiltert)
- 401: Befestigungspunkt
- 411: Auszugshilfe
- 413: Dichtlippe
- 502: Verengung (Einlasskanal)
- 503: gekrümmtes Segment (Einlasskanal)
- 601: Fenster
- 602: Vorsprung (insbesondere Paddel)

## Patentansprüche

1. Abscheidesystem (100) zur Abscheidung von Verunreinigungen aus einem Luftstrom (121); wobei das Abscheidesystem (100) umfasst,
- eine als Hohlzylinder ausgebildete Filtereinheit (103, 104) mit einem Luftfilter (104), die einen zylinderförmigen Sammelbereich (105) für Verunreinigungen umschließt;
- eine zylinderförmige Gehäusewand (101), die die Filtereinheit (103, 104) umschließt, so dass zwischen der Gehäusewand (101) und der Filtereinheit (103, 104) ein Spalt (106) gebildet wird; und
- einen von der Gehäusewand (101) zu dem Sammelbereich (105) verlaufenden Einlasskanal (102), der ausgebildet ist, den Luftstrom (121) mit den Verunreinigungen von außerhalb des Abscheidesystems (100) zu dem Sammelbereich (105) zu führen; wobei das Abscheidesystem (100) ausgebildet ist, den Luftstrom (121) von dem Sammelbereich (105) weiter durch die Filtereinheit (103, 104) über den Spalt (106) aus dem Abscheidesystem (100) heraus zu führen;
**dadurch gekennzeichnet, dass** die Filtereinheit (103, 104) eine Aussparung aufweist, durch die der Einlasskanal (102) von der Gehäusewand (101) zu dem Sammelbereich (105) verläuft.

2. Abscheidesystem (100) gemäß Anspruch 1, wobei
- das Abscheidesystem (100) einen Kolben (112) umfasst, der ausgebildet ist, an einer Innenwand der Filtereinheit (103, 104) entlang bewegt zu werden, um an der Innenwand haftende Verunreinigungen von der Innenwand der Filtereinheit (103, 104) zu lösen;
- der Kolben (112) insbesondere eine elastische und/oder ringförmige Lippe aufweist, die die Innenwand der Filtereinheit (103, 104) berührt; und
- der Kolben (112) insbesondere ausgebildet ist, entlang einer Längsachse des Sammelbereichs (105) von einer ersten Stirnfläche bis zu einer zweiten Stirnfläche bewegt zu werden.

3. Abscheidesystem (100) gemäß Anspruch 2, wobei der Kolben (112) ausgebildet ist, Verunreinigungen in dem Sammelbereich (105) an der zweiten Stirnfläche zu komprimieren.

4. Abscheidesystem (100) gemäß einem der Ansprüche 2 bis 3, wobei
- das Abscheidesystem (100) an der zweiten Stirnfläche der Gehäusewand (101) einen Deckel (113), insbesondere eine Klappe, umfasst; und
- der Kolben (112) ausgebildet ist, den Deckel (113) zu öffnen, wenn der Kolben (112) zu der zweiten Stirnfläche hinbewegt wird, so dass Verunreinigungen aus dem Sammelbereich (105) entfernt werden, insbesondere herausfallen, können.

5. Abscheidesystem (100) gemäß einem der Ansprüche 2 bis 4, wobei
- das Abscheidesystem (100) eine Kolbenstange (111) umfasst, die es ermöglicht, den Kolben (112) innerhalb des Sammelbereichs (105) zu bewegen; und/oder
- das Abscheidesystem (100) einen Seilzug und/oder eine Feder umfasst, die ausgebildet sind, den Kolben (112) innerhalb des Sammelbereichs (105) zu bewegen.

6. Abscheidesystem (100) gemäß einem der vorhergehenden Ansprüche, wobei
- die Filtereinheit (103, 104) ein dem Sammelbereich (105) zugewandtes Sieb (103) umfasst;
- das Sieb (103) über eine Gesamtfläche des Siebs (103) eine durchschnittliche Porengröße aufweist; und
- das Sieb (103) an einer dem Einlasskanal (102) gegenüberliegenden Stelle, an der der Luftstrom (121) aus dem Einlasskanal (102) auf das Sieb (103) trifft, eine Porengröße aufweist, die kleiner als die durchschnittliche Porengröße ist.

7. Abscheidesystem (100) gemäß einem der vorhergehenden Ansprüche, wobei
- die zylinderförmige Gehäusewand (101) die Filtereinheit (103, 104) derart umschließt, dass zwischen der Gehäusewand (101) und der Filtereinheit (103, 104) ein ringförmiger Spalt (106) gebildet wird; und/oder
- das Abscheidesystem (100) derart ausgebildet ist, dass der aus der Filtereinheit (103, 104) in den Spalt (106) austretende Luftstrom (123) entlang der Gehäusewand (101) zu einer Stirnfläche der Gehäusewand (101) verläuft.

8. Abscheidesystem (100) gemäß einem der vorhergehenden Ansprüche, wobei
- der Luftfilter (104) einen Lamellenfilter und/oder einen Microfilter umfasst;
- der Luftfilter (104) ausgebildet ist, Feinstaub, insbesondere Partikel mit einer Partikelgröße zwischen 1 µm und 20 µm, aus dem Luftstrom (121) zu filtern; und/oder
- der Luftfilter (104) eine Vielzahl von Lamellen aufweist, die um den Sammelbereich (105) verteilt angeordnet sind.

9. Abscheidesystem (100) gemäß einem der vorhergehenden Ansprüche, wobei
- die Filtereinheit (103, 104) ein dem Sammelbereich (105) zugewandtes Sieb (103) umfasst, das ausgebildet ist, Verschmutzungen aus dem Luftstrom (121) zurückzuhalten, die eine Partikelgröße aufweisen, die gleich wie oder größer als ein Größen-Schwellenwert ist;
- der Luftfilter (104) zwischen der Gehäusewand (101) und dem Sieb (103) angeordnet ist; und
- der Luftfilter (104) ausgebildet ist, Verschmutzungen aus dem Luftstrom (122) durch das Sieb (103) zurückzuhalten, die eine Partikelgröße aufweisen, die kleiner als der Größen-Schwellenwert ist.

10. Abscheidesystem (100) gemäß einem der vorhergehenden Ansprüche, wobei die Filtereinheit (103, 104) eine Aussparung zur Bereitstellung eines Sichtfensters aufweist, das eine Sicht von außerhalb der Gehäusewand (101) auf den Sammelbereich (105) ermöglicht.

11. Abscheidesystem (100) gemäß einem der vorhergehenden Ansprüche, wobei
- der Luftfilter (104) eine Vielzahl von Lamellen umfasst, die sich jeweils entlang einer Längsachse der Gehäusewand erstrecken;
- das Abscheidesystem (100) an einer Innenseite der Gehäusewand (101) zumindest einen Vorsprung (602) aufweist, der in einen Zwischenraum zwischen zwei Lamellen hineinragt; und
- das Abscheidesystem (100) derart ausgebildet ist, dass das Luftfilter (104) und die Gehäusewand (101) relativ zueinander hin- und her verdreht werden können, so dass der Vorsprung (602) in Zwischenräume zwischen unterschiedlichen Lamellenpaaren bewegt wird, und dabei jeweils einen Ruck zur Reinigung zumindest einer Lamelle bewirkt.

12. Abscheidesystem (100) gemäß einem der vorhergehenden Ansprüche, wobei
- die Filtereinheit (103, 104) eine zylinderförmige Innenwand aufweist, die dem Sammelbereich (105) zugewandt ist und/oder die den Sammelbereich (105) umschließt; und
- der Einlasskanal (102) ausgebildet ist, einen tangential zu der Innenwand der Filtereinheit (103, 104) verlaufenden und/oder zyklonartig bzw. schraubenförmig verlaufenden Luftstrom (121) in dem Sammelbereich (105) zu bewirken.

13. Abscheidesystem (100) gemäß Anspruch 12, wobei
- der Einlasskanal (102) ein entlang der Innenwand der Filtereinheit (103, 104) verlaufendes, gekrümmtes Segment (503) aufweist; und/oder
- an der Innenwand der Filtereinheit (102) ein oder mehrere Führungsrippen angeordnet sind, die ausgebildet sind, den aus dem Einlasskanal (102) in den Sammelbereich (105) eintretenden Luftstrom (121) zyklonartig und/oder schraubenförmig um eine Längsachse des Sammelbereichs (105) zu führen.

## Claims

1. Separation system (100) for separating impurities from an air flow (121); wherein the separation system (100) comprises
- a filter unit (103, 104) embodied as a hollow cylinder with an air filter (104), which surrounds a cylindrical collection region (105) for impurities;
- a cylindrical housing wall (101), which surrounds the filter unit (103, 104), so that a gap (106) is formed between the housing wall (101) and the filter unit (103, 104); and
- an inlet channel (102) which runs from the housing wall (101) to the collection region (105) and is embodied to guide the air flow (121) with the impurities from outside the separation system (100) to the collection region (105); wherein the separation system (100) is embodied to guide the air flow (121) from the collection region (105) further through the filter unit (103, 104), via the gap (106), out of the separation system (100);
**characterised in that** the filter unit (103, 104) has a recess, through which the inlet channel (102) runs from the housing wall (101) to the collection region (105).

2. Separation system (100) according to claim 1, wherein
- the separation system (100) comprises a piston (112), which is embodied to be moved along an inner wall of the filter unit (103, 104), in order to release impurities adhering to the inner wall from the inner wall of the filter unit (103, 104);
- the piston (112) in particular has an elastic and/or annular lip, which touches the inner wall of the filter unit (103, 104); and
- the piston (112) in particular is embodied to be moved along a longitudinal axis of the collection region (105) from a first end face up to a second end face.

3. Separation system (100) according to claim 2, wherein the piston (112) is embodied to compress impurities in the collection region (105) on the second end face.

4. Separation system (100) according to one of claims 2 to 3, wherein
- the separation system (100) comprises a lid (113), in particular a flap, on the second end face of the housing wall (101); and
- the piston (112) is embodied to open the lid (113) when the piston (112) is moved towards the second end face, so that impurities are able to be removed, in particular are able to fall out, from the collection region (105).

5. Separation system (100) according to one of claims 2 to 4, wherein
- the separation system (100) comprises a piston rod (111), which makes it possible to move the piston (112) within the collection region (105); and/or
- the separation system (100) comprises a Bowden cable and/or a spring, which are embodied to move the piston (112) within the collection region (105).

6. Separation system (100) according to one of the preceding claims, wherein
- the filter unit (103, 104) comprises a sieve (103) facing towards the collection region (105);
- the sieve (103) has an average pore size over an overall area of the sieve (103); and
- the sieve (103), at a point which lies opposite the inlet channel (102) and at which the air flow (121) from the inlet channel (102) strikes the sieve (103), has a pore size that is smaller than the average pore size.

7. Separation system (100) according to one of the preceding claims, wherein
- the cylindrical housing wall (101) surrounds the filter unit (103, 104) in such a manner that an annular gap (106) is formed between the housing wall (101) and the filter unit (103, 104); and/or
- the separation system (100) is embodied in such a manner that the air flow (123) escaping from the filter unit (103, 104) into the gap (106) runs along the housing wall (101) towards an end face of the housing wall (101).

8. Separation system (100) according to one of the preceding claims, wherein
- the air filter (104) comprises a lamella filter and/or a microfilter;
- the air filter (104) is embodied to filter fine dust, in particular particles with a particle size between 1 µm and 20 µm, from the air flow (121); and/or
- the air filter (104) has a large number of lamellae, which are arranged such that they are distributed around the collection region (105).

9. Separation system (100) according to one of the preceding claims, wherein
- the filter unit (103, 104) comprises a sieve (103) facing towards the collection region (105), which is embodied to hold back impurities from the air flow (121) that have a particle size that is equal to or greater than a size threshold value;
- the air filter (104) is arranged between the housing wall (101) and the sieve (103); and
- the air filter (104) is embodied to hold back impurities from the air flow (122) through the sieve (103) that have a particle size that is smaller than the size threshold value.

10. Separation system (100) according to one of the preceding claims, wherein the filter unit (103, 104) has a recess for providing a viewing window, which makes it possible to view the collection region (105) from outside the housing wall (101).

11. Separation system (100) according to one of the preceding claims, wherein
- the air filter (104) comprises a large number of lamellae, which extend along a longitudinal axis of the housing wall in each case;
- the separation system (100), on an inner side of the housing wall (101), has at least one protrusion (602), which projects into an intermediate space between two lamellae; and
- the separation system (100) is embodied in such a manner that the air filter (104) and the housing wall (101) can be twisted back and forth relative to one another, so that the protrusion (602) is moved in intermediate spaces between different lamella pairs, and in doing so causes a jerk to clean at least one lamella in each case.

12. Separation system (100) according to one of the preceding claims, wherein
- the filter unit (103, 104) has a cylindrical inner wall, which is facing towards the collection region (105) and/or which surrounds the collection region (105); and
- the inlet channel (102) is embodied to cause an airflow (121), which runs tangentially to the inner wall of the filter unit (103, 104) and/or runs in a cyclone-like or helical manner, in the collection region (105).

13. Separation system (100) according to claim 12, wherein
- the inlet channel (102) has a curved segment (503) running along the inner wall of the filter unit (103, 104); and/or
- arranged on the inner wall of the filter unit (102) are one or more guide ribs, which are embodied to guide the air flow (121) entering the collection region (105) from the inlet channel (102) in a cyclone-like and/or helical manner around a longitudinal axis of the collection region (105).

## Revendications

1. Système de séparation (100) pour la séparation des impuretés d'un flux d'air (121) ; dans lequel le système de séparation (100) comprend,
- une unité filtrante (103, 104) formée sous la forme d'un cylindre creux avec un filtre à air (104), qui entoure une zone de collecte (105) cylindrique pour les impuretés ;
- une paroi de carter (101) cylindrique, qui entoure l'unité filtrante (103, 104), de sorte qu'une fente (106) est formée entre la paroi de carter (101) et l'unité filtrante (103, 104) ; et
- un conduit d'entrée (102) s'étendant de la paroi de carter (101) vers la zone de collecte (105), qui est formé pour diriger le flux d'air (121) avec les impuretés de l'extérieur du système de séparation (100) vers la zone de collecte (105) ; dans lequel le système de séparation (100) est formé pour diriger le flux d'air (121) de la zone de collecte (105) en outre à travers l'unité filtrante (103, 104) en dehors du système de séparation (100) via la fente (106) ;
**caractérisé en ce que** l'unité filtrante (103, 104) présente un évidement à travers lequel le conduit d'entrée (102) s'étend, de la paroi de carter (101) à la zone de collecte (105).

2. Système de séparation (100) selon la revendication 1, dans lequel
- le système de séparation (100) comprend un piston (112) formé pour être déplacé le long d'une paroi intérieure de l'unité filtrante (103, 104) pour détacher les impuretés adhérant à la paroi intérieure de la paroi intérieure de l'unité filtrante (103, 104) ;
- le piston (112) présente en particulier une lèvre élastique et/ou annulaire qui touche la paroi intérieure de l'unité filtrante (103, 104) ; et
- le piston (112) est en particulier formé pour être déplacé le long d'un axe longitudinal de la zone de collecte (105), d'une première surface frontale jusqu'à une deuxième surface frontale.

3. Système de séparation (100) selon la revendication 2, dans lequel le piston (112) est formé pour comprimer les impuretés dans la zone de collecte (105) au niveau de la deuxième surface frontale.

4. Système de séparation (100) selon l'une des revendications 2 à 3, dans lequel
- le système de séparation (100) comprend un couvercle (113), en particulier un clapet, sur la deuxième surface frontale de la paroi de carter (101) ; et
- le piston (112) est formé pour ouvrir le couvercle (113) lorsque le piston (112) est déplacé vers la deuxième surface frontale, de sorte que les impuretés peuvent être enlevées de la zone de collecte (105), en particulier tomber.

5. Système de séparation (100) selon l'une des revendications 2 à 4, dans lequel
- le système de séparation (100) comprend une tige de piston (111) qui permet de déplacer le piston (112) à l'intérieur de la zone de collecte (105) ; et/ou
- le système de séparation (100) comprend un câble et/ou un ressort qui sont formés pour déplacer le piston (112) à l'intérieur de la zone de collecte (105).

6. Système de séparation (100) selon l'une des revendications précédentes, dans lequel
- l'unité filtrante (103, 104) comprend un crible (103) orienté vers la zone de collecte (105) ;
- le crible (103) présente une taille de pores moyenne sur une surface totale du crible (103) ; et
- le tamis (103) présente une taille de pores inférieure à la taille de pores moyenne en un endroit opposé au conduit d'entrée (102) où le flux d'air (121) provenant du conduit d'entrée (102) rencontre le crible (103).

7. Système de séparation (100) selon l'une des revendications précédentes, dans lequel
- la paroi de carter (101) cylindrique entoure l'unité filtrante (103, 104) de telle sorte qu'une fente (106) annulaire est formée entre la paroi de carter (101) et l'unité filtrante (103, 104) ; et/ou
- le système de séparation (100) est formé de telle sorte que le flux d'air (123) sortant de l'unité filtrante (103, 104) dans la fente (106) s'étend le long de la paroi de carter (101) vers une surface frontale de la paroi de carter (101).

8. Système de séparation (100) selon l'une des revendications précédentes, dans lequel
- le filtre à air (104) comprend un filtre à lamelles et/ou un microfiltre ;
- le filtre à air (104) est formé pour filtrer les poussières fines, en particulier les particules ayant une taille de particules comprise entre 1 µm et 20 µm, du flux d'air (121) ; et/ou
- le filtre à air (104) présente une pluralité de lamelles qui sont disposées de façon répartie autour de la zone de collecte (105).

9. Système de séparation (100) selon l'une des revendications précédentes, dans lequel
- l'unité filtrante (103, 104) comprend un crible (103) dirigé vers la zone de collecte (105), qui est formé pour retenir les impuretés du flux d'air (121) qui présentent une taille de particules égale ou supérieure à une valeur de seuil de taille ;
- le filtre à air (104) est disposé entre la paroi de carter (101) et le crible (103) ; et
- le filtre à air (104) est formé pour retenir à travers le crible (103) les impuretés du flux d'air (122) qui ont une taille de particules inférieure à la valeur de seuil de taille.

10. Système de séparation (100) selon l'une des revendications précédentes, dans lequel l'unité filtrante (103, 104) présente un évidement pour la mise à disposition d'une fenêtre qui permet de voir la zone de collecte (105) depuis l'extérieur de la paroi de carter (101).

11. Système de séparation (100) selon l'une des revendications précédentes, dans lequel
- le filtre à air (104) comprend une pluralité de lamelles qui s'étendent respectivement le long d'un axe longitudinal de la paroi de carter ;
- le système de séparation (100) présente sur un côté intérieur de la paroi de carter (101) au moins une saillie (602) qui fait saillie dans un espace intermédiaire entre deux lamelles ; et
- le système de séparation (100) est formé de telle sorte que le filtre à air (104) et la paroi de carter (101) peuvent être tournés dans un sens et dans l'autre l'un par rapport à l'autre, de sorte que la saillie (602) est déplacée dans des espaces intermédiaires entre différentes paires de lamelles et provoque ce faisant respectivement une secousse pour le nettoyage d'au moins une lamelle.

12. Système de séparation (100) selon l'une des revendications précédentes, dans lequel
- l'unité filtrante (103, 104) présente une paroi intérieure cylindrique qui est dirigée vers la zone de collecte (105) et/ou qui entoure la zone de collecte (105) ; et
- le conduit d'entrée (102) est formé pour provoquer un flux d'air (121) s'étendant tangentiellement à la paroi intérieure de l'unité filtrante (103, 104) et/ou s'étendant de façon cyclonique ou hélicoïdale dans la zone de collecte (105).

13. Système de séparation (100) selon la revendication 12, dans lequel
- le conduit d'entrée (102) présente un segment incurvé (503) s'étendant le long de la paroi intérieure de l'unité filtrante (103, 104) ; et/ou
- une ou plusieurs nervure(s) de guidage, qui est/sont formée(s) pour guider le flux d'air (121) entrant dans la zone de collecte (105) depuis le conduit d'entrée (102) de façon cyclonique ou hélicoïdale autour d'un axe longitudinal de la zone de collecte (105), est/sont disposée(s) sur la paroi intérieure de l'unité filtrante (102).
